# EUROPÄISCHE PATENTSCHRIFT

(11) **EP 3 977 669 B1**
(45) Veröffentlichungstag und Bekanntmachung des Hinweises auf die Patenterteilung: **10.09.2025**
(21) Anmeldenummer: 20728672.5
(22) Anmeldetag: 19.05.2020
(51) Int. Cl.: H04L 9/08, H04W 12/30, H04W 12/04

(54) **VERFAHREN ZUM EINRICHTEN EINES SUBSKRIPTIONS-PROFILS, VERFAHREN ZUM BEREITSTELLEN EINES SUBSKRIPTIONS-PROFILS, TEILNEHMERIDENTITÄTSMODUL**
METHOD FOR SETTING UP A SUBSCRIPTION PROFILE, METHOD FOR PROVIDING A SUBSCRIPTION PROFILE, SUBSCRIBER IDENTITY MODULE
PROCÉDÉ D'INSTALLATION D'UN PROFIL D'ABONNEMENT, PROCÉDÉ DE FOURNITURE D'UN PROFIL D'ABONNEMENT, MODULE D'IDENTITÉ D'ABONNÉ

(30) Priorität: 24.05.2019 DE 102019003674
(43) Veröffentlichungstag der Anmeldung: 06.04.2022
(73) Patentinhaber: Giesecke+Devrient Mobile Security Germany GmbH, 81677 München (DE)
(72) Erfinder: NITSCH, Nils, 85570 Markt Schwaben (DE)
(74) Vertreter: Ter Meer Steinmeister & Partner
(86) Internationale Anmeldenummer: PCT/EP2020/025233
(87) Internationale Veröffentlichungsnummer: WO 2020/239255

(56) Entgegenhaltungen:
- WO-A1-2015/085058
- WO-A1-2015/085058
- WO-A2-2014/108835
- WO-A2-2014/108835
- DE-B3- 102017 212 994
- DE-B3- 102017 212 994
- US-A1- 2016 241 537
- US-A1- 2016 241 537
- US-A1- 2017 155 507

## Beschreibung

### TECHNISCHES GEBIET DER ERFINDUNG

Die Erfindung bezieht sich auf ein Verfahren zum Einrichten eines Subskriptions-Profils in einem Teilnehmeridentitätsmodul, bevorzugt eine embedded UICC, sowie ein Verfahren zum Bereitstellen eines Subskriptions-Profils für ein Teilnehmeridentitätsmodul, bevorzugt eine eUICC, mittels eines Subskriptions-Servers, bevorzugt eines SM-DP, ein entsprechendes Teilnehmeridentitätsmodul und ein Computerprogramm-Produkt.

Zur Nutzung von Diensten eines Kommunikationsnetzes enthält ein Endgerät, beispielsweise ein Mobiltelefon oder ein Maschine-zu-Maschine-Modul, englisch Machine-to-Machine-Module, kurz M2M-Modul, ein Teilnehmeridentitätsmodul. In dem Teilnehmeridentitätsmodul ist zumindest ein Subskriptions-Profil, nachfolgend vereinfacht auch als Profil bezeichnet, enthalten. Das Profil umfasst Teilnehmeridentitätsdaten, um einen Teilnehmer am Kommunikationsnetz, beispielsweise einem Mobilfunknetz, zu identifizieren und zu authentisieren. Durch dieses Profil ist es einem Betreiber des Kommunikationsnetzwerks möglich, die Nutzung eines angebotenen Dienstes, beispielsweise eines Sprach- und/oder Datendienstes, jedem Teilnehmer im Kommunikationsnetzwerk eindeutig zuzuordnen. Weiterhin ist es dem Betreiber möglich, einen Netzzugang, also das Einbuchen in das Kommunikationsnetz, zu ermöglichen, sobald eine Authentisierung des Teilnehmers stattgefunden hat. Er kann zudem den Netzzugang verweigern, falls eine Authentisierung des Teilnehmers nicht möglich ist.

### TECHNISCHER HINTERGRUND

Heutige Teilnehmeridentitätsmodule sind dazu eingerichtet, ein Profil auch nach ihrer Herstellung zu empfangen, einzurichten, zu verwenden, zu aktualisieren, zu aktivieren, zu deaktivieren, zu löschen und/oder zu erweitern. Dies wird allgemein als Teilnehmeridentitätsverwaltung, auch Subskriptions-Management, bezeichnet. Ein Teilnehmeridentitätsmodul kann dabei mehrere unterschiedliche Profile aufweisen.

Änderungen an einem Profil erfordern dabei das Bereitstellen eines vollständigen Profils. Bei konventionellen Plug-In-SIM-Karten könnte die Profil-Änderung einfach durch Austausch der SIM-Karte im Endgerät durchgeführt werden. Alternativ wird ein neues Profil in dem Teilnehmeridentitätsmodul eingerichtet, was besonders bei Teilnehmeridentitätsmodulen durchgeführt wird, die nicht ohne Weiteres im Endgerät ausgetauscht werden können. Beim Einrichten eines Profils in einer eUICC wird eine Profil-Dateistruktur in dem Teilnehmeridentitätsmodul erstellt und Profil-Daten werden in einem nachgelagerten Schritt in diese Profil-Dateistruktur hineingeladen und dort installiert.

In der US 2017 / 0 155 507 A1 und der US 2016 / 0 269 386 A1 werden Verfahren zum Installieren eines Profils in einer eUICC vorgeschlagen. Dabei wird ein, mit einem ersten Schlüssel, verschlüsseltes Profil netzwerkseitig abgelegt. Wenn die Profilinstallation für die eUICC beginnt, wird das verschlüsselte Profil und ein verschlüsselter erste Schlüssel an die eUICC gesendet. Die verschlüsselten Profile werden durch den ersten Schlüssel entschlüsselt und in der eUICC installiert.

Die WO 2019 / 050 325 A1 beschreibt ein Kommunikationsschema und -system für die Konvergenz eines 5G-Kommunikationssystems zur Unterstützung einer höheren Daten-übertragungsrate nach dem 4G-System und der IoT-Technologie, wobei Methoden und Geräte zur Unterstützung eines Profiltransfers zwischen Endgeräten sowie Methoden und Geräte zur Unterstützung der einfachen Nutzung eines Kommunikationsprodukts zur Verfügung gestellt werden.

In der US 2016 / 0 241 537 A1 werden ein Verfahren zum Übertragen eines Profils durch ein elektronisches Gerät und ein dieses unterstützendes elektronisches Gerät bereitgestellt. Das elektronische Gerät enthält einen sicheren Speicher, der mindestens ein Profil installiert und löscht, ein Profilverwaltungsmodul, das eine Authentifizierungsprozedur über ein elektronisches Zielgerät auf der Grundlage von Geräteinformationen des elektronischen Zielgeräts und Profilinformationen eines Zielprofils durchführt, wenn ein Profil vorhanden ist Übertragungsereignis über ein Zielprofil des mindestens einen Profils, das auf dem sicheren Speicher installiert ist, auftritt, und eine Kommunikationsschnittstelle, die das Zielprofil basierend auf einem Authentifizierungsergebnis über das elektronische Zielgerät überträgt.

In der WO 2014 / 108 835 A2 wird ein Verfahren zum Sichern von Daten beschrieben, wobei das Verfahren Folgendes umfasst: Aufteilen eines geheimen Schlüssels in mehrere geheime Schlüsselanteile; Speichern jedes der mehreren geheimen Schlüsselanteile in einem anderen Server einer Vielzahl von Servern, so dass keiner der Server Zugriff auf den geheimen Schlüssel und auf den geheimen Schlüsselanteil hat, der in einem anderen der Server gespeichert ist; Verwenden eines Servers der mehreren Server zum Ausführen eines sicheren Berechnungsprotokolls zum Bestimmen eines Werts einer Funktion, die auf alle der mehreren geheimen Schlüsselanteile anspricht, ohne einem der mehreren Server Zugriff auf den geheimen Schlüssel und den geheimen Schlüssel zu gewähren Anteil, der auf einem anderen der Server gespeichert ist; und Verwenden des berechneten Werts der Funktion zum Sichern der Daten.

Die US 2017 / 155 507 A1 betrifft ein Verfahren und ein Gerät zum Installieren eines Profils einer eingebetteten universellen integrierten Leiterplatte (eUICC) und insbesondere ein Verfahren und ein Gerät zum Ferninstallieren von Teilnehmerinformationen (Profil) für die mobile Kommunikation, die eine universelle integrierte Leiterplatte (UICC) ersetzen, auf einem Sicherheitsmodul. Das Verfahren umfasst die folgenden Schritte: Erfassen von mindestens einem oder mehreren mit einem ersten Kennwortschlüssel verschlüsselten Profilen und von einem oder mehreren mit einem zweiten Kennwortschlüssel verschlüsselten ersten Kennwortschlüsseln; und wenn die Profilinstallation für die eUICC beginnt, Übertragen der einen oder mehreren verschlüsselten Profile und der einen oder mehreren verschlüsselten ersten Kennwortschlüssel an mindestens eine eUICC, wobei der erste Kennwortschlüssel durch den ersten Kennwortschlüssel mit einem dritten Kennwortschlüssel erneut verschlüsselt und an die eine oder mehrere eUICCs übertragen wird und die verschlüsselten Profile durch den ersten Kennwortschlüssel entschlüsselt und jeweils auf der einen oder mehreren eUICCs installiert werden.

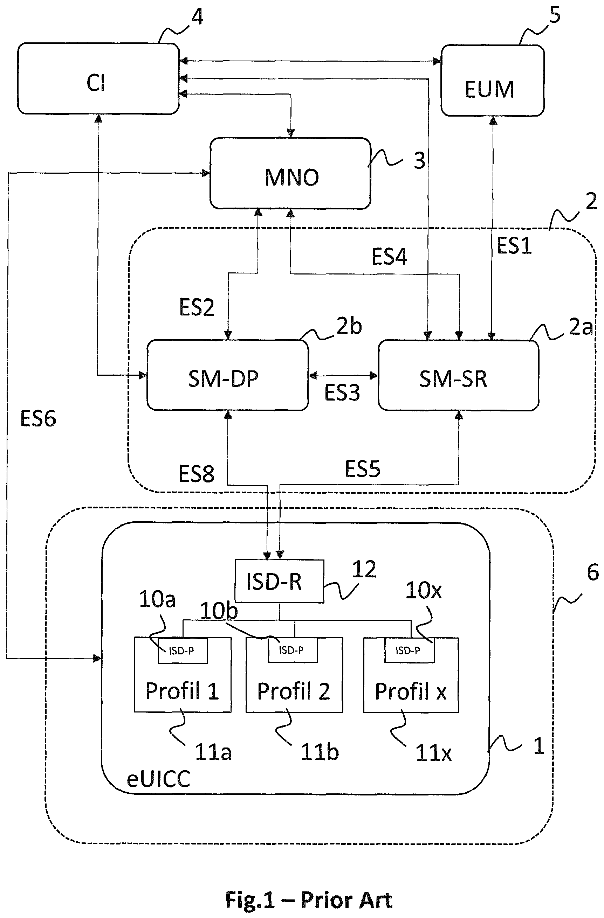

Die technischen GSMA Spezifikationen "12FAST.13 - Embedded SIM Remote Provisioning Architecture 17 Dezember 2013" - nachfolgend als technische Spezifikation [1] bezeichnet -; "SGP02-Remote-Provisioning-Architecture-for-Embedded-UICC-Technical-Spezifikation V2.0, 13 Oktober 2014" - nachfolgend als technische Spezifikation [2] bezeichnet - und "SGP.22 - RSP" vom 27. Februar 2017 - nachfolgend als technische Spezifikation [3] bezeichnet - beschreiben eine derartige Verwaltung von Subskriptionen. Die technische Spezifikation [1] beschreibt dabei die Aufgaben und Funktionen, mittels derer ein Profil von einem Subskriptions-Server in eine eUICC geladen und dort installiert wird. Die technische Spezifikation [2] beschreibt den protokollarischen Ablauf beim Herunterladen und Installieren eines Subskriptions-Profils in eine eUICC. Die technische Spezifikation [3] gibt dabei eine technische Beschreibung der eUICC Architektur, deren Schnittstellen und der Sicherheitsfunktionen, insbesondere bei Verwendung in einem Kunden-Endgerät. Fig. 1 zeigt vereinfacht ein System zum Verwalten von Profilen bzw. Teilnehmeridentitätsmodulen gemäß der technischen Spezifikationen [1] bis [3].

In der technischen GSMA Spezifikation [1] wird das Einrichten und Installieren von Profilen auf einem Teilnehmeridentitätsmodul im Abschnitt 3.1.2 ab Seite 35 näher erläutert. Dabei wird zum Herunterladen des Profils eine dreiteilige Prozedur "Profile download and installation" verwendet, um ein neues Profil auf ein Teilnehmeridentitätsmodul einzubringen und zu installieren. Im ersten Teil dieser Prozedur (Abschnitt 3.1.1 "ISD-P Creation") wird eine neue Dateistruktur (ISD-P) in der eUICC erstellt, siehe auch Fig. 10 der Spezifikation [1]. Im zweiten Teil dieser Prozedur (Abschnitt 3.1.2 "Key Establishment with Scenario#3-Mutual Authentication") wird ein kryptografischer Schlüssel vom Subskriptions-Server, SM-DP, für die eUICC ausgetauscht, siehe auch Fig. 11 der Spezifikation [1] mit kryptografischem Schlüssel "ES8.keyEstablishISDPkeyset", um einen sicheren Kanal aufzubauen. Dabei werden auch Signaturen verwendet. Im folgenden Teil 3 der Prozedur (Abschnitt 3.1.3 "download and installation of the profile") werden die Profil-Daten des neuen Profils über den kryptografisch gesicherten Kanal gesendet. Die eUICC entfaltet ("unwrapping") die Daten, um das neue Profil mit den gesendeten Profil-Daten auszustatten (nachfolgend als installieren bezeichnet). Das neue Profil wird also im Rahmen eines kryptografisch abgesicherten Kanals übertragen. Wenn in einem der drei Teile der Prozedur ein Fehler auftritt, wird die Prozedur abgebrochen und die Dateistruktur prompt gelöscht (siehe Abschnitt 3.1.4 "Error Management Sub-Routine"). Die Auslieferung des Profils ist also zeitlich streng mit der Installation (also der eigentlichen Einrichtung) gekoppelt.

In der technischen Spezifikation [3] wird im Anschnitt 2.5 die Profil-Absicherung zur Auslieferung des Profils beschrieben. Gemäß Abschnitt 2.5.3 der technischen Spezifikation [3] kann das Profil mittels kryptografischer Sitzungsschlüssel S-ENC und S-MAC (SCP03, SCP03t-basiert) geschützt werden, siehe auch "Protected Profile Packaging". Gemäß Abschnitt 2.5.4 der Spezifikation erfolgt zudem noch eine Bindung des Profils an eine spezielle eUICC durch eine Schlüssel-Vereinbarung. Ein Subskriptions-Server ist dazu unter anderem mit einem Zertifikat "CERT.XXauth.ECDSA" und einem privaten Schlüsselteil "SK.XXauth.ECDSA" eines kryptografischen Schlüssels ausgestattet. Ein Teilnehmeridentitätsmodul ist unter anderem mit dem Zertifikat "CERT.EUICC.ECDSA" und einem privaten Schlüsselteil "SK.EUICC.ECDSA" ausgestattet. Um das Profil bereitzustellen, werden gemäß Abschnitt 3.1.3 und Fig. 11 der technischen Spezifikation [3] die Profil-Metadaten erstellt und darüber eine Signatur "smdpSignature2" unter Verwendung einer Teilnehmeridentitätsmodul-Signatur "euiccSignature1" erstellt. Metadaten und die erstellte Signatur werden an das Teilnehmeridentitätsmodul gesendet, wo diese Signatur "smdpSignature2" gemäß Abschnitt 3.1.3.2 verifiziert wird, um das korrekte Einbringen zu bestätigen (Download Confirmation). Während der unmittelbar darauffolgenden Installation des Profils werden die Metadaten abgespeichert. Mittels der Funktion "ES8+ReplaceSession-Keys" können die Sitzungsschlüssel S-ENC und S-MAC durch neue Sitzungsschlüssel PPK-ENC und PPK-CMAC ausgetauscht werden, siehe Abschnitt 3.1.3.3 und Fig. 14 der technischen Spezifikation [3]. Dabei bleiben die Profile an diese eUICC gebunden. Hier ist ebenfalls ein sehr strenges Zeitmanagement vorgegeben, siehe "Timeout" Szenarien zwischen den einzelnen Schritten und die "Period of Time" in der ein Profil nach dem Einbringen zu installieren ist, siehe Abschnitt 3.1.5 der Spezifikation [3]. Das Installieren des Profils ist damit zeitlich sehr streng mit dem Einbringen (Download) gekoppelt.

Ein Aktivieren eines Profil, ein Deaktivieren eines Profils, ein Löschen eines Profils, ein Erstellen eines Profils, ein Wechsel von einem ersten Profil auf ein zweites Profil und/oder das Aktualisieren eines vorhandenen Profils wird beispielsweise zu einem Zeitpunkt erforderlich, zu dem das Teilnehmeridentitätsmodul bereits an einen Teilnehmer ausgeliefert ist und ein Profil zum Nutzen von Diensten eines Kommunikationsnetzes verwendet wird. Darüber hinaus könnte der Teilnehmer zu einem Zeitpunkt nach der Auslieferung/Herstellung des Teilnehmeridentitätsmoduls wünschen, weitere Dienste des Kommunikationsnetzes oder eines anderen Kommunikationsnetzes zu nutzen. Derartige Vorgänge können nicht während einer Personalisierung bei der Herstellung von Teilnehmeridentitätsmodulen vorbereitet werden.

Wünschenswert ist nun aber eine Lösung zum Einbringen von Subskriptions-Profilen zeitlich unabhängig von dem tatsächlichen Installieren und Einrichten des Profils im Teilnehmeridentitätsmodul. Beispielsweise soll das Einbringen bereits bei Auslieferung des Teilnehmeridentitätsmoduls (an einen Zwischenhändler oder Familienoberhaupt oder Verwalter von Firmen-eUICC) erfolgen, die tatsächliche Einrichtung soll erst viel später, beispielsweise bei Vertragsabschluss erfolgen. Dabei soll das Profil in einem frühen Stadium in das Teilnehmeridentitätsmodul eingebracht sein, ein Einrichten (Installieren) sollte zeitlich viel später (ggf. Wochen, Monate oder sogar Jahre später) erfolgen können. Zudem soll es auch möglich sein, eine Profil-Einrichtung an eine vertrauenswürdige Instanz zu delegieren, sodass der Zeitpunkt der Einrichtung nicht ausschließlich von einem Subskriptions-Server bestimmt wird. Das Verfahren soll dabei dennoch sicher gegenüber Manipulationen und Angriffen bleiben.

### ZUSAMMENFASSUNG DER ERFINDUNG

Der Erfindung liegt die Aufgabe zu Grunde, Verfahren und Module zu schaffen, bei denen ein Einrichten eines Subskriptions-Profils zeitlich vollkommen entkoppelt von einem Bereitstellen bzw. Einbringen des Profils in das Teilnehmeridentitätsmodul ist.

Die Aufgabe wird gelöst durch ein Teilnehmeridentitätsmodul nach einem der vorhergehenden Ansprüche gelöst. Vorteilhafte Ausgestaltungen der Erfindung sind in den abhängigen Ansprüchen angegeben.

Erfindungsgemäß wird ein Verfahren zum Einrichten eines Subskriptions-Profils in einem Teilnehmeridentitätsmodul, bevorzugt eine embedded UICC, vorgeschlagen. Dabei laufen im Teilnehmeridentitätsmodul die folgenden Verfahrensschritte ab: Empfangen eines mit einem kryptografischen Schlüssel eines Subskriptions-Servers verschlüsselten Subskriptions-Profils, wobei dem Teilnehmeridentitätsmodul der kryptografische Schlüssel zum Entschlüsseln des Subskriptions-Profils zum Zeitpunkt des Empfangens unbekannt ist, d.h. dass das Teilnehmeridentitätsmodul den kryptografischen Schlüssel zum Entschlüsseln Subskriptions-Profils zum Zeitpunkt des Empfangens nicht aufweist; Speichern des verschlüsselten Subskriptions-Profils ohne das Subskriptions-Profil zu entschlüsseln; Empfangen des kryptografischen Schlüssels zu einem Zeitpunkt nach dem Speichern-Schritt; Entschlüsseln des verschlüsselten Subskriptions-Profils mit dem kryptografischen Schlüssel; und Installieren des entschlüsselten Subskriptions-Profil zum Einrichten des Subskriptions-Profil in dem Teilnehmeridentitätsmodul.

Bei einem Teilnehmeridentitätsmodul im Sinne der Erfindung handelt es sich um ein in Baugröße und Ressourcenumfang reduziertes elektronisches Modul, welches einen Mikrocontroller und mindestens eine Datenschnittstelle zur Kommunikation mit dem Endgerät aufweist. Dieses Teilnehmeridentitätsmodul weist einen sicheren Speicherbereich auf, indem Teilnehmeridentitätsdaten sicher eingebracht sind, um Manipulation- und/oder Missbrauchsversuche bei der Identifizierung und/oder Authentisierung am Netzwerk zu verhindern. Das Teilnehmeridentitätsmodul ist mittels eines Endgeräts betriebsfähig, wobei das Modul bis auf Versorgungssignale, wie Versorgungsspannung, Takt, Reset etc. autark ist.

Bei dem Teilnehmeridentitätsmodul handelt es sich beispielsweise um eine Chipkarte, auch als Universal Integrated Circuit Card, kurz UICC, oder SIM-Karte bezeichnet. Das Teilnehmeridentitätsmodul dient dazu, mit den im sicheren Speicherbereich gespeicherten maschinenlesbaren Teilnehmeridentitätsdaten einen Teilnehmer in einem Kommunikationsnetz zu identifizieren und für das Nutzen von Diensten zu authentifizieren.

Alternativ handelt es sich bei dem Teilnehmeridentitätsmodul um einen integralen Bestandteil innerhalb des Endgeräts, beispielsweise als fest verdrahteter elektronischer Baustein. Derartige Teilnehmeridentitätsmodule werden auch als embedded UICC (eUICC) bezeichnet. In dieser Bauform sind diese Teilnehmeridentitätsmodule nicht für eine Entnahme aus dem Endgerät vorgesehen und können prinzipiell nicht einfach ausgetauscht werden. Derartige Teilnehmeridentitätsmodule können auch als embedded Secure Elements, also als eine sichere Hardwarekomponente im Endgerät ausgestaltet sein.

Alternativ handelt es sich bei dem Teilnehmeridentitätsmodul um ein Machine-to-Machine-, kurz M2M-, Modul. Diese Module dienen der Fernüberwachung, -kontrolle und - wartung von Endgeräten wie Maschinen, Anlagen und Systemen. Sie können alternativ auch für Zähleinheiten wie Stromzähler, Warmwasserzähler etc. verwendet werden.

Alternativ ist das Teilnehmeridentitätsmodul als eine Softwarekomponente in einem vertrauenswürdigen Teil eines Betriebssystems, einer sogenannten Trusted Execution Environment, kurz TEE, des Endgerätes ausgebildet. Das Teilnehmeridentitätsmodul ist dann beispielsweise innerhalb einer gesicherten Laufzeitumgebung in Form von darin ablaufenden Programmen, sogenannten "Trustlets" ausgebildet.

Teilnehmeridentitätsdaten im Sinn der Erfindung sind beispielsweise Daten, die einen Teilnehmer eindeutig im Kommunikationsnetz identifizieren. Dazu zählt beispielsweise eine Teilnehmerkennung, auch International Mobile Subscriber Identity, kurz IMSI und/oder teilnehmerspezifische Daten. Die IMSI ist das in einem Mobilfunk-konununikationsnetzwerk eindeutige Teilnehmeridentitätsdatei. Sie setzt sich zusammen aus dem Landescode MCC (Mobile Country Code), dem Netzwerkcode MNC (Mobile Network Code) und einer laufenden Nummer, die vom Netzbetreiber vergeben wird.

Darüber sind Teilnehmeridentitätsdaten beispielsweise Daten, die einen Teilnehmer eindeutig am Kommunikationsnetz authentisieren, beispielsweise ein Authentisierungsalgorithmus, spezifische Algorithmus-Parameter, ein kryptografischer Authentisierungsschlüssel Ki und/oder ein kryptografischer Over-The-Air, kurz OTA, Schlüssel.

Ein Kommunikationsnetzwerk im Sinn der Erfindung ist eine technische Einrichtung, auf der die Übertragung von Signalen unter Identifizierung und/oder Authentisierung des Teilnehmers stattfindet, wodurch Dienste angeboten werden. Das Kommunikationsnetz ist bevorzugt ein Mobilfunknetz. Eine Gerät-zu-Gerät Kommunikation unter Aufsicht des Kommunikationsnetzes ist ebenfalls denkbar. Insbesondere wird hier ein Mobilfunknetz beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation, das "Long Term Evolution", kurz LTE, als Vertreter der vierten Generation als Mobilfunknetz verstanden oder ein Mobilfunknetz der 5. Generation mit dem derzeitigen Arbeitstitel "5G" als ein Kommunikationsnetz verstanden.

Ein Dienst ist insbesondere ein Sprachdienst oder ein Datendienst, mit dem Informationen und/oder Daten über das Kommunikationsnetzwerk übertragen werden.

Ein Subskriptions-Server ist eine Komponente, die Teil des Kommunikationsnetzes ist oder mit ihm in Kommunikationsverbindung steht, um Teilnehmeridentitätsmodule zu verwalten, beispielsweise verschieden Profile zu erstellen ("create profile "), einzurichten ("profile download and installation"), zu aktivieren ("enable profile"), zu deaktivieren ("disable profile") und/oder zu löschen ("delete profile"). Der Subskriptions-Server ist beispielsweise in Serverkomponenten, beispielsweise einem Subscription Managing Secure Routing Server, SM-SR und einen Subscription Managing Data Preparation, SM-DP unterteilt, wobei das erfindungsgemäße Verfahren bevorzugt mit einem SM-DP durchgeführt wird. Die Kommunikation zwischen Subskriptions-Server und eUICC erfolgt bevorzugt über einen sicheren Kanal, beispielsweise SCP80 und SCP81, wie in ETSI 102 225 und/oder ETSI 102 226 definiert ist.

Das erfindungsgemäße Teilnehmeridentitätsmodul muss dabei nicht zwingend ein aktiviertes Profil aufweisen. Das Teilnehmeridentitätsmodul könnte aber auch bereits weitere unterschiedliche Profile aufweisen.

Ein eingerichtetes Profil in einem Teilnehmeridentitätsmodul weist eine eigene Dateistruktur mit darin eingebrachten (installierten) Profil-Daten auf. Diese Profil-Daten ermöglichen den Aufbau, Betrieb und Abbau einer Verbindung des Endgeräts im Kommunikationsnetz. Die Profildaten eines Profils sind insbesondere Daten, die einen Teilnehmer eindeutig am Kommunikationsnetz identifizieren und authentisieren können, beispielsweise ein Authentisierungsalgorithmus, spezifische Algorithmus-Parameter, ein kryptografischer Authentisierungsschlüssel Ki, ein kryptografischer Over-The-Air (OTA) Schlüssel, eine Teilnehmerkennung, IMSI; eine Teilnehmeridentitätsmodulkennung, ICCID. Die Profil-Daten können auch Anwendungen sein, die diesem Profil eindeutig zuzuordnen sind, beispielsweise eine Authentisierungsanwendung, eine Signieranwendung, oder eine Verschlüsselungsanwendung. Die Profil-Daten weisen beispielsweise auch mindestens einen Ordner (directory file, DF) und mindestens eine Elementardatei (elementary file, EF) auf. In diese DF und EF sind möglicherweise der Authentisierungsalgorithmus, spezifische Algorithmus-Parameter, der Ki, der OTA Schlüssel, die IMSI, die ICCID untergebracht.

Das Empfangen (=Einbringen) erfolgt (wenn auch in verschlüsselter Form) bevorzugt gemäß den technischen Spezifikationen [1], [2] und [3]. Dabei wird bevorzugt eine Dateistruktur eines neuen Profils erstellt. Die Profil-Daten des Profils werden bevorzugt in verschlüsselter Form übertragen. Das Entschlüsseln und Einrichten der Profildaten sind vom Empfangen zeitlich entkoppelt.

Die Verschlüsselung des Profils erfolgt mit einem kryptografischen Schlüssel, der dem Teilnehmeridentitätsmodul unbekannt ist. Somit handelt es sich bei dem kryptografischen Schlüssel um keinen der in den technischen Spezifikationen [1] bis [3] beschriebenen Schlüsseln, die beispielsweise als Sitzungsschlüssel zum Aufbau eines sicheren Kanals oder im Rahmen des Protected Profile Packaging auf Basis der Signaturen von Server und eUICC ausgehandelt wurden.

Der zum Verschlüsseln des Profils verwendete kryptografische Schlüssel ist beispielsweise ein zum Verschlüsseln verwendetes Geheimnis. Das Geheimnis ist der eUICC unbekannt. Das Geheimnis wird als Schlüssel in Form eines Datensatzes zu einem Zeitpunkt nach dem Abspeichern des an die eUICC übertragen. Dieser kryptografische Schlüssel ist dabei beispielsweise ein Token, der an die eUICC übertragbar ist, beispielsweise ein Software-Token.

Erfindungsgemäß sind die Profil-Daten zum Zeitpunkt vor dem Einrichten (Installieren) nicht entschlüsselt und können von dem Teilnehmeridentitätsmodul nicht zur bestimmungsgemäßen Verwendung, also dem Aufbau, Betrieb und Abbau einer Verbindung des Endgeräts im Kommunikationsnetz, verwendet werden. Stattdessen sind die Profildaten verschlüsselt in der Dateistruktur (ISD-P) des Profils abgelegt. Aufgrund der Verschlüsselung und dem Nicht-Vorhandensein des entsprechenden kryptografischen Schlüssels kann keines der Profil-Daten von dem Teilnehmeridentitätsmodul verwendet werden.

Das verschlüsselte Profil, insbesondere die verschlüsselten Profil-Daten, wird in einem Speicherbereich des Teilnehmeridentitätsmoduls abgelegt. Auch nach dem Speichern-Schritt ist das Profil verschlüsselt, wobei insbesondere die Profil-Daten nicht entschlüsselt, entfaltet oder installiert sind.

Zu einem Zeitpunkt nach dem Speichern wird der kryptografische Schlüssel empfangen, mit dem das verschlüsselte Profil entschlüsselt werden kann. Der Zeitraum zwischen Schlüssel-Empfangen und Abspeichern ist unbestimmt. Der Zeitraum kann Wochen, Monate oder sogar Jahre betragen. Somit kann ein Teilnehmeridentitätsmodul ein Profil speichern (eingebracht, heruntergeladen) und erst zu einem bedeutend späteren Zeitpunkt einrichten (entpacken und installieren). Das Abspeichern kann mit von der eUICC bestätigt werden.

Bevorzugt wird das verschlüsselte Subskriptions-Profil von einem Subskriptions-Server gesendet und in der eUICC empfangen. Das Profil kann dann im Rahmen einer Subskriptions-Verwaltung gemäß der technischen Spezifikation [1] bis [3] bereitgestellt werden, wobei die Prozeduren "create profile" und "download profile" angewendet werden, jedoch mit der Änderung, dass das herunterzuladende Profil verschlüsselt ist und im unmittelbaren Anschluss an das Empfangen des Profils nicht entschlüsselt und somit nicht entpackte ("unwrap") und eingerichtet ("install") werden kann. Eine zusätzliche Absicherung des Transports - durch Aufbau eines gesicherten Kanals bzw. durch Bindung des Profils an eine spezifische eUICC im Rahmen des "profile package bounding" ist von dem erfindungsgemäßen Verschlüsseln des Profils zu unterscheiden und kann hier ebenfalls (zusätzlich) angewendet werden.

Alternativ wird das verschlüsselte Subskriptions-Profil von einem Herausgeber des Teilnehmeridentitätsmoduls empfangen. Dies erfolgt dann bevorzugt während der Herstellung im Rahmen einer Personalisierung.

Schließlich wird der kryptografischer Schlüssel empfangen. Der Schlüssel ist insbesondere eine Information, die es ermöglicht, das verschlüsselte Profil zu entschlüsseln. Beispielsweise wird ein asymmetrischer Schlüsselpaar (PKI-Infrastruktur) oder ein symmetrisches Schlüsselpaar verwendet. Beispielsweise ist der kryptografische Schlüssel ein Software-Token, der als Datensatz im Teilnehmeridentitätsmodul empfangen wird.

Der Schlüssel wird zum Entschlüsseln des Profils verwendet. Schließlich wird das Profil in dem Teilnehmeridentitätsmodul entpackt und auch installiert. Das erfindungsgemäße Installieren erfolgt dabei bevorzugt entsprechend der technischen Spezifikation [1] bis [3]. Ab diesem Zeitpunkt, der x-beliebig nach dem Abspeichern sein kann, kann mittels des Teilnehmeridentitätsmoduls auf Teile des Profils, beispielsweise die Dateistruktur mit darin befindlichen Profil-Daten zugegriffen werden. Der x-beliebige Zeitpunkt ist beispielsweise der Zeitpunkt eines Vertragsabschluss der Subskription, welcher nun nicht mehr mit dem Bereitstellen/Einbringen des Profils zusammenfallen muss, der Zeitpunkt also vom Einbringen des Profils entkoppelt ist.

Bevorzugt wird der Schlüssel in dem Teilnehmeridentitätsmodul von einem Subskriptions-Server empfangen. Somit wurde der Schlüssel an keine andere Instanz des Systems gemäß Fig. 1 gesendet und konnte nicht entwendet werden. Der Zeitpunkt des Schlüssel-Empfangens kann abhängig von einem Aktivieren-Befehl einer System-Instanz gemäß Fig. 1 erfolgt sein.

Alternativ oder zusätzlich wird der Schlüssel an eine vertrauenswürdige Instanz gesendet, beispielsweise ein zweites Teilnehmeridentitätsmodul. Somit kann das Entschlüsseln an eine weitere Instanz (den Besitzer/Betreiber des zweiten Teilnehmeridentitätsmoduls) delegiert werden. Mit dieser Instanz kann beispielsweise eine bestimmte Zugehörigkeit (Familie, Unternehmen) oder hierarchische Abhängigkeit definiert sein. Das Entpacken und Installieren eines Profils kann dann beispielsweise bei Einstellung eines neuen Mitarbeiters zum Ausgeben eines Firmentelefons erfolgen, das (erste) Teilnehmeridentitätsmodul kann unabhängig vom Einstellungszeitraum bereits das Profil in verschlüsselter Form abgespeichert haben.

Alternativ oder zusätzlich weist der Schlüssel zwei Teile auf (Schlüsselteil ist hier synonym zur Verwendung von zwei verschiedenen Schlüsseln), wobei nur die Verknüpfung beider Teile (Bilden des Schlüssels) das verschlüsselt abgespeicherte Profil entschlüsselt. Beispielsweise könnte das Profil zweimal mit unterschiedlichen Schlüsseln verschlüsselt sein, wobei ein erster Schlüssel im Subskriptions-Server verbleibt und von dort an das Teilnehmeridentitätsmodul gesendet wird. Ein zweiter Schlüssel wird an eine vertrauenswürdige Instanz ausgehändigt, beispielsweise ein zweites Teilnehmeridentitätsmodul. Nur beide Schlüsselteile (Schlüssel 1 und Schlüssel 2) ermöglichen ein Entschlüsseln des Profils. Die Sicherheit ist damit weiter erhöht. Alternativ bildet eine logische Rechenvorschrift (UND, ODER, EXKLUSIV-ODER) aus dem ersten Schlüsselteil und dem zweiten Schlüsselteil den kryptografischen Schlüssel.

Nach dem Entschlüsseln und Installieren ist das Profil auf dem Teilnehmeridentitätsmodul vollständig eingerichtet. Das Teilnehmeridentitätsmodul sendet eine Bestätigung an den Subskriptions-Server, dass das Profil nunmehr vollständig eingerichtet ist. Es wird dann nachfolgend bevorzugt das aktivierte Profil.

Der Subskriptions-Server ist dabei eine Fernverwaltung des Teilnehmeridentitätsmoduls, insbesondere gemäß der Definition aus den technischen Spezifikationen [1] bis [3].

In einem weiteren Aspekt der Erfindung ist ein Verfahren zum Bereitstellen von Subskriptions-Profilen für ein Teilnehmeridentitätsmodul, bevorzugt eine eUICC, mittels eines Subskriptions-Servers, bevorzugt eines SM-DP, vorgesehen. Im Subskriptions-Server laufen die folgenden Verfahrensschritte ab: Erstellen eines Subskriptions-Profils für ein Teilnehmeridentitätsmodul; Verschlüsseln des erstellten Subskriptions-Profils mit einem kryptografischen Schlüssel, der dem Teilnehmeridentitätsmodul zunächst unbekannt ist; Bereitstellen des verschlüsselten Subskriptions-Profils zum Einbringen des verschlüsselten Subskriptions-Profils in das Teilnehmeridentitätsmodul; Senden eines zum Entschlüsseln des Subskriptions-Profils geeigneten kryptografischen Schlüssels oder eines ersten Schlüsselteils zu einem Zeitpunkt nach dem Senden des verschlüsselten Subskriptions-Profils; und Empfangen einer Bestätigung vom Teilnehmeridentitätsmodul, dass das zweite Subskriptions-Profil entschlüsselt und eingerichtet wurde.

Bevorzugt erfolgt das Einbringen von dem Subskriptions-Server oder einem Herausgeber des Teilnehmeridentitätsmoduls.

Bevorzugt erfolgt das Senden des kryptografischen Schlüssels oder des ersten Schlüsselteils vom Subskriptions-Server direkt zum Teilnehmeridentitätsmodul.

Bevorzugt erfolgt das Senden des kryptografischen Schlüssels vom Subskriptions-Server direkt zu einem zweiten Teilnehmeridentitätsmodul, wobei das zweite Teilnehmeridentitätsmodul den kryptografischen Schlüssel zum Entschlüsseln des Subskriptions-Profils zum Teilnehmeridentitätsmodul sendet.

Weiter bevorzugt umfasst das Senden des ersten Schlüsselteils vom Subskriptions-Server zudem ein Senden des ersten Schlüsselteils vom Subskriptions-Server direkt zum Teilnehmeridentitätsmodul; und ein Senden eines zweiten Schlüsselteils vom Subskriptions-Server direkt zu einem zweiten Teilnehmeridentitätsmodul, wobei der kryptografische Schlüssel zum Entschlüsseln des verschlüsselten Profils aus dem ersten Schlüsselteil und dem zweiten Schlüsselteil gebildet wird.

Die Verfahrensschritte umfassen bevorzugt eine Erstellen-Funktion und/oder eine Aktivieren-Funktion und/oder eine Deaktivieren-Funktion gemäß der technischen Spezifikationen [1] bis [3].

Das Senden einer Bestätigung vom Teilnehmeridentitätsmodul, dass das Profil eingerichtet ist, zeigt dem Subskriptions-Server an, dass das Profil nun verwendet werden kann. Diese Bestätigung erfolgt beispielsweise im Rahmen einer "Download complete" Bestätigung gemäß der GSMA Spezifikationen [1] bis [3] durch die eUICC.

Auf diese Bestätigung erfolgt beispielsweise das Senden eines Profil-Aktivieren Kommandos vom Subskriptions-Server an das Teilnehmeridentitätsmodul zum Aktivieren des eingerichteten Subskriptions-Profil. Dabei kann auch ein bis dahin aktives Profil im Teilnehmeridentitätsmodul deaktiviert werden. Ein Umschalten zwischen zwei Profilen wäre somit erreicht.

Mit dem Entschlüsseln ist zusätzlich auch ein Entpacken erfolgt.

In einem weiteren Aspekt ist ein Teilnehmeridentitätsmodul vorgesehen, umfassend ein im Teilnehmeridentitätsmodul abgespeichertes verschlüsseltes Subskriptions-Profil. Das Modul umfasst eine Entschlüsselungs-Funktion, die dazu eingerichtet ist, nach einem Empfangen eines kryptografischen Schlüssels das verschlüsselte Subskriptions-Profils zu entschlüsseln, wobei der kryptografische Schlüssel zeitlich später im Teilnehmeridentitätsmodul. Zudem ist eine Installations-Funktion eingerichtet zum Installieren des entschlüsselten Subskriptions-Profils im Teilnehmeridentitätsmodul vorgesehen, wodurch das Subskriptions-Profil im Teilnehmeridentitätsmodul eingerichtet ist.

Bevorzugt ist die Entschlüsselungs- und die Installations-Funktion durch eine Funktionalität des Betriebssystems OS des Teilnehmeridentitätsmoduls realisiert - oder alternativ durch ein Applet realisiert -, welche bzw. welches eingerichtet ist, nach dem Empfangen des kryptografischen Schlüssels zu starten.

Bevorzugt ist eine Schlüssel-Bilde-Funktion im Teilnehmeridentitätsmodul vorgesehen, um aus zwei Schlüsselteilen (einen Teil vom Subskriptions-Server und einen Teil vom zweiten Teilnehmeridentitätsmodul) einen kryptografischen Schlüssel zu bilden. Die Schlüssel-Bilde Funktion wird durch ein Applet realisiert, welches eingerichtet ist. nach dem Empfangen beider der Schlüsselteile zu starten.

Bevorzugt umfasst das Teilnehmeridentitätsmodul einen Datenspeicher zum Abspeichern der Subskriptions-Profile, eine Schnittstelle, die eingerichtet zur Kommunikation mit dem Subskriptions-Server, bevorzugt über ein Endgerät, welches das Teilnehmeridentitätsmodul aufweist, ist und eine Schnittstelle, die eingerichtet zur Kommunikation mit einem Netzwerk-Server ist. Zudem sind Mittel, die eingerichtet sind, das vorhergehend beschriebene Verfahren durchzuführen, vorgesehen.

Bei einem Endgerät im Sinn der Erfindung handelt es sich prinzipiell um ein Gerät oder eine Gerätekomponente, welches Mittel zur Kommunikation mit dem Kommunikationsnetzwerk aufweist, um Dienste des Kommunikationsnetzes nutzen zu können. Beispielsweise ist ein mobiles Endgerät wie ein Smart Phone, ein Tablet-PC, ein Notebook, ein PDA unter dem Begriff zu fassen. Unter dem Endgerät können beispielsweise auch Multimedia-Endgeräte wie digitale Bilderrahmen, Audiogeräte, Fernsehgeräte, E-Book-Reader verstanden werden, die ebenfalls Mittel zur Kommunikation mit dem Kommunikationsnetzwerk aufweisen. Beispielsweise umfasst der Begriff Endgeräte auch jegliche Art von Maschinen, Automaten, Fahrzeuge, Einrichtungen welche Mittel, insbesondere Mobilfunkmodems, zur Kommunikation mit dem Kommunikationsnetzwerk aufweisen.

In einem weiteren Aspekt ist ein Subskriptions-Server, bevorzugt ein SM-DP, eingerichtet zum Bereitstellen des Subskriptions-Profils an ein Teilnehmeridentitätsmodul, bevorzugt eine eUICC, vorgesehen, wobei der Subskriptions-Server das oben beschriebene Verfahren durch eine Verschlüsselungsfunktion realisiert.

Der Subskriptions-Server umfasst weiter eine Schnittstelle, die zur Kommunikation mit dem Teilnehmeridentitätsmodul, bevorzugt über ein Endgerät, welches das Teilnehmeridentitätsmodul aufweist, eingerichtet ist; eine Schnittstelle, die eingerichtet zur Kommunikation mit einem Netzwerk-Server; und Mittel, die eingerichtet sind, das vorhergehende Verfahren durchzuführen.

Zudem ist ein Computerprogramprodukt vorgesehen, welches ausführbar installiert in einem Teilnehmeridentitätsmodul und aufweisend Mittel zum Ausführen der Verfahrensschritte einer der vorhergehenden Verfahren ist. Bevorzugt ist das Computerprogrammprodukt ein Java Card Applet, welches in der eUICC zum Ausführen der Verfahrensschritte eingebracht ist.

Eine Funktion ist ein in dem Teilnehmeridentitätsmodul installierter ausführbarer Programmcode, der sich durch ein der Funktion entsprechendes Kommando, das an die Teilnehmeridentitätsmodul gesandt wird, zur Ausführung bringen lässt. Eine Funktion kann Teil eines Applets auf dem Teilnehmeridentitätsmodul sein. Mehrere Funktionen können durch ein Applet nacheinander aufgerufen werden.

Somit ist erfindungsgemäß ein Teilnehmeridentitätsmodul geschaffen, bei dem das Einbringen vom Einrichten der Subskriptions-Profile im Teilnehmeridentitätsmodul zeitlich entkoppelt ist.

Beispielsweise erfolgt die Kommunikation mittels SMS, HTTPS oder TCP Sitzungen (=Sessions).

Das Aktivieren/Deaktivieren eines Profils erfolgt beispielsweise mittels eines proaktiven Kommandos (REFRESH), welches von der eUICC an das Endgerät gesendet wird, um die eUICC neu zu starten.

### KURZE BESCHREIBUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.
Fig. 1 zeigt eine beispielhafte Ausführung eines Systems zum Verwalten von Teilnehmerprofilen gemäß der GSMA-Spezifikation [1] bis [3];
Fig. 2 zeigt eine Struktur eines Profils zur Verwendung;
Fig. 3 zeigt ein Ausführungsbeispiel eines Ablaufdiagrams eines erfindungsgemäßen Verfahrens in einem Teilnehmeridentitätsmodul;
Fig. 4 zeigt ein Ausführungsbeispiel eines Ablaufdiagrams eines erfindungsgemäßen Verfahrens in einem Subskriptions-Server;
Fig. 5 zeigt ein Ausführungsbeispiel eines Ablaufdiagrams eines erfindungsgemäßen Verfahrens zwischen einem Teilnehmeridentitätsmodul und einem Subskriptions-Server.
Fig. 6 zeigt ein zur Fig. 5 erweitertes Ausführungsbeispiel eines Ablaufdiagrams eines erfindungsgemäßen Verfahrens zwischen einem Teilnehmeridentitätsmodul und einem Subskriptions-Server.

### DETALLIERTE BESCHREIBUNG VON AUSFÜHRUNGSBEISPIELEN

Fig. 1 zeigt eine beispielhafte Ausführung eines Systems zum Verwalten von Teilnehmerprofilen 11a, 11b, 11x gemäß der oben erwähnten GSMA-Spezifikation [1], [2] und [3].

Gemäß Fig. 1 wird eine eUICC 1 durch den Server 2 fernadministriert. Die eUICC 1 ist dabei in einem Endgerät 6 fest- oder entnehmbar installiert. Eine eUICC 1 des Systems in Fig. 1 hat eine Sicherheitsdomäne (=SD) mit unterschiedlichen Privilegien und Konfigurationen für das Verwalten von den Teilnehmerprofilen 11a, 11b, 11x, wie beispielsweise eine ISD-R 12, die durch eine Serverkomponente 2a (=Subscription Manager Secure Routing, kurz SM-SR) verwaltet wird. Eine eUICC-gesteuerte Sicherheitsdomäne, ECASD, kann ebenfalls aufgenommen werden, die durch einen Zertifikatsherausgebers 4 (=englisch Certificate Issuer, CI) auf der eUICC 1 verwaltet wird. Eine Dateistruktur eines Profils 11a, 11b, 11x wird durch die Serverkomponente 2b (=die Datenaufbereitung, englisch Subscription Manager Data Preparation SM-DP) verwaltet. In Fig. 1 sind drei Profile 11a, 11b, 11x dargestellt, von denen jedes eine Dateistruktur 10 (=ISD-P) aufweist und deren Profildaten innerhalb der Dateistruktur 10 durch den Server 2 verwaltet und gesichert wird.

Die Anzahl der Profile 11a, 11b, 11x, die die eUICC 1 beinhalten kann, ist nicht auf drei beschränkt und kann mehr oder weniger betragen.

In Fig. 1 sind der SM-SR 2a und der SM-DP 2b als getrennte Serverkomponenten des Servers 2 dargestellt, sie werden nachfolgend aber als ein Server 2 betrachtet.

Pro eUICC 1 ist nur ein ISD-R 12 vorgesehen. Das ISD-R 12 kann von einem eUICC-Hersteller 5, (=eUICC-Manufacturer, EUM), während der Herstellung der eUICC 1 installiert und erstmals personalisiert werden. Nach der Herstellung der eUICC 1 befindet sich das ISD-R 12 im Lebenszykluszustand PERSONALISIERT. Das ISD-R 12 kann sodann Teilnehmerverwaltungs-Funktionen auf jedem ISD-Ps 10 durchführen.

Pro Profil 11a, 11b, 11x ist eine Dateistruktur 10a, 10b, 10x (ISD-P) vorgesehen. Auf einer eUICC 1 ist zu jedem Zeitpunkt nur eine Dateistruktur 10a (ISD-P) aktiviert. Eine Dateistruktur 10a (ISD-P) wird vom ISD-R 12 installiert und dann mit dem Server 2 personalisiert. Mindestens eine Dateistruktur 10a (ISD-P) mit einem Profil 11a, 11b, 11x kann installiert und erstmals von der EUM 5 während der Herstellung von eUICC 1 personalisiert werden, um zukünftige eUICC-Konnektivität zu ermöglichen.

Außer dem ISD-R 12 hat keine Komponente außerhalb des ISD-P 10 Einsicht oder Zugriff auf eine Profilkomponente der Profile 11a, 11b, 11x. Das ISD-R 12 hat Lesezugriff auf Verbindungsparameter der einzelnen Profile 11a, 11b, 11x. Keine Profilkomponente ist von Komponenten außerhalb des jeweiligen Profils sichtbar oder zugänglich. Durch das ISD-R 12 wird es erfindungsgemäß ermöglicht, dass zum Installieren eines zweiten Profils auch auf Profil-Daten eines ersten Profils zugegriffen werden kann.

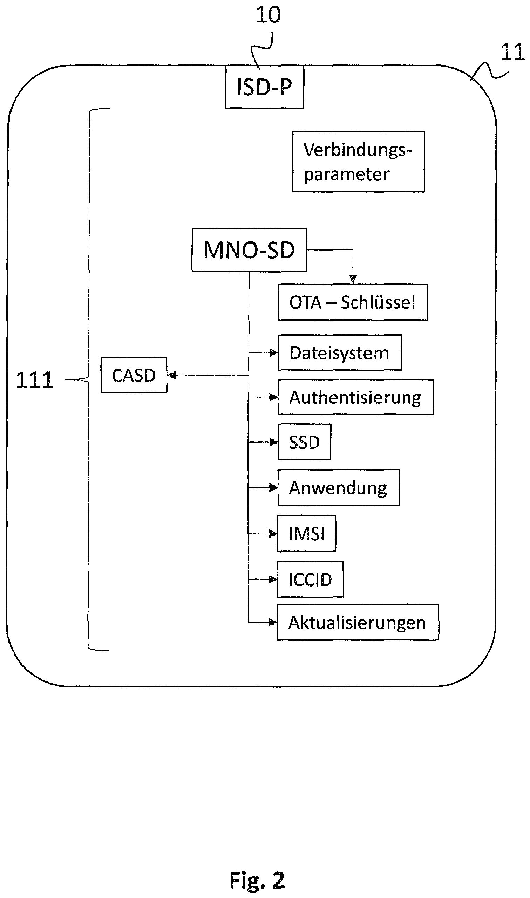

Eine Dateistruktur 10 bleibt während ihrer gesamten Lebensdauer dem ISD-R 12 zugeordnet, damit das ISD-R 12 folgende Teilnehmerverwaltungsfunktionen ausführen kann: Profilerstellung - die Zuordnung zwischen dem ISD-R 12 und einer Dateistruktur 10 kann jederzeit erstellt werden; Profillöschung; Profilaktivierung; Profildeaktivierung; Rückfallpositions-Einstellung; und Profiltransportfunktion. Die Struktur der Profile 11a, 11b, 11x wird in Fig. 2 gezeigt.

In Fig. 1 ist eine Vielzahl von Schnittstellen ESx des System vorgesehen:
Eine Schnittstelle ES8 adressiert Funktionen an die eUICC 1 über einen sicheren Kanal, der zwischen dem SM-DP 2b und der Dateistruktur 10 eines Profils 11 aufgebaut ist. Um das in sicherer Form zu ermöglichen, wird das Profil 11 mit mindestens einem Schlüsselsatz personalisiert. Die ES8 Schnittstelle wird durch einen sicheren Kanal realisiert, der durch einen sicheren Kanal zwischen dem SM-DP 2b und dem SM-SR 2a (=ES3-Schnittstelle) eingerichtet ist, und weiter durch einen sicheren Kanal SCP80 oder SCP81 zwischen dem SM-SR 2a und dem ISD-R 12 getunnelt werden kann. Die Kommunikation wird dann vom ISD-R 12 an das jeweilige Profil 11 übergeben.

Die Schnittstelle ES6 adressiert Funktionen an die eUICC 1 über einen sicheren Kanal, der zwischen einem Mobilfunknetzbetreiber (Mobile network Operator, MNO) 3 und einer MNO-Sicherheitsdomäne eingerichtet wurde, die in jedem ISD-P 10 enthalten ist. Die eUICC 1 unterstützt die Ports SCP80 und SCP81 gemäß der Definition in ETSI 102 225 und ETSI 102 226 für diese E6-Schnittstelle. Die anfänglichen OTA-Schlüsselsätze sind Teil jedes Profils 11a, 11b, 11x und werden vom SM-DP 2b während eines Profil-Download- und Installationsvorgangs geladen oder von der EUM 5 geladen, bevor eUICC 1 ausgegeben wird.

Die Schnittstelle ES5 adressiert Funktionen an die eUICC 1 über einen sicheren Kanal, der zwischen dem SM-SR 2a und dem ISD-R 12 aufgebaut ist. Die eUICC 1 unterstützt SCP80 und SCP81, wie in ETSI 102 225 und ETSI 102 226 definiert ist, für diese E5-Schnittstelle. Um SCP80/SCP81 zu aktivieren, wird das ISD-R 12 vor der Ausgabe durch die EUM 5 mit entsprechenden Schlüsselsätzen personalisiert. Die Schlüsselsätze werden über die SM-SR 2a in das ISD-R 12 geladen; z.B. mittels Schnittstelle ES1.

Im System von Fig. 1 wird die OTA-Kommunikation ausschließlich von der SM-SR 2a übernommen. Die SM-SR 2a verwendet beispielsweise SMS, CAT_TP oder HTTPS für die Over-The-Air, OTA, Kommunikation mit der eUICC 1. Bei Verwendung von HTTPS unterstützen SM-SR 2a und eUICC 1 eine Domain-Name-Auflösung, um eine IP-Adresse des SM-SR 2a auflösen zu können. In Long-Term-Evolution-Netzen unterstützt das System von Fig. 1 auch Kurznachrichten (=Short-Message-Service, SMS). Die SM-SR 2a ist frei in der Wahl des Übertragungsprotokolls entsprechend der Fähigkeiten der eUICC 1, des Endgeräts 6 und des ausführenden Servers 2. Die eUICC 1 unterstützt den Versand von sicheren Datenpaketen über SMS gemäß 3GPP TS 31.115.

Gemäß der technischen Spezifikation [1], Kapitel 3.3.1.2.2 "Profile Download and Installation Function" wird mit einer "Download" Funktion ein Profil in eine eUICC 1 geladen. Über "Download" hinaus sind jedoch weitere, begleitende Funktionen durchzuführen. Gemäß der technischen Spezifikation [1], Kap. 3.3.1.3.1 "ISD-P Creation Function" und der technischen Spezifikation [2], Kap. 3.1.1 "ISD-P Creation" werden "Create" Funktionen benötigt, um in der eUICC 1 eine Dateistruktur 10, insbesondere die ISD-P, anzulegen.

Gemäß der technischen Spezifikation [2], Kap. 3.1.3 "Download an Installation of the Profile" wird nach Anlegen der ISD-P ein Profil heruntergeladen und in der Dateistruktur, insbesondere der ISD-P, abgespeichert. Gemäß der technischen Spezifikation [1], Kapitel 3.3.1.2.3 "Profile Content Update Function" und Kapitel 3.3.1.2.4 "Policy Rules Update Function" werden "Update" Funktionen angewandt, um Aktualisierungen entsprechend dem neu heruntergeladenen Profil vorzunehmen. Gemäß der technischen Spezifikation [1], Kap. 3.3.1.3.4 "Profile Enabling Function" und der technischen Spezifikation [2], Kap. 3.2 "Profile Enabling" werden "Enable" Funktionen durchgeführt, um ein heruntergeladenes Profil zu aktivieren, insbesondere eine ISD-P, und hierdurch für den Nutzer der eUICC 1 verwendbar zu machen.

Fig. 2 zeigt eine Profil-Dateistruktur 10 eines Profils 11 gemäß der Fig. 1. Das Profil 11 wird wie oben beschrieben durch die Dateistruktur 10 gesteuert. Die Dateistruktur 10 weist Profil-Daten auf. Beispielsweise kann eine der folgenden Komponenten als Profil-Datum enthalten sein in der Dateistruktur 10: eine MNO-Sicherheitsdomäne (MNO-SD) mit den OTA-Schlüsselsätzen der MNO; mindestens ein Authentisierungsparameter (Ki), eine Netzwerkzugriffsanwendung, Richtlinienregeln, ein Dateisystem beinhaltend Ordner (DF) und Elementardateien (EF); Verbindungsparameter des Profils, Anwendungen; eine Teilnehmerkennung, IMSI, eine Teilnehmeridentitätsmodulkennung ICCID, Profilaktualisierungen.

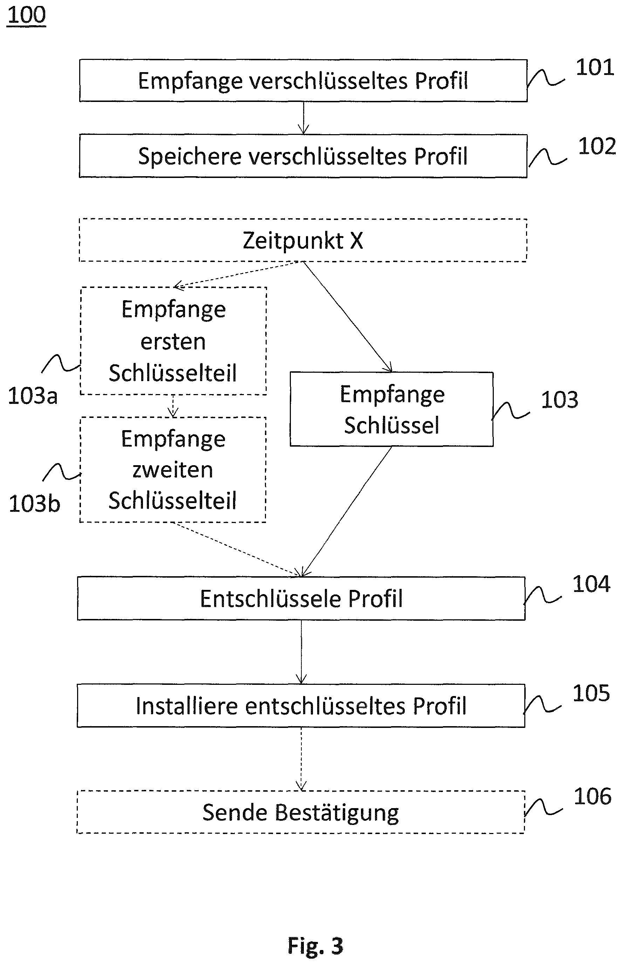

Fig. 3 zeigt ein Ausführungsbeispiel eines Ablaufdiagrams eines erfindungsgemäßen Verfahrens 100 in einem Teilnehmeridentitätsmodul, nachfolgend als eUICC 1 bezeichnet.

Im Schritt 101 wird ein verschlüsseltes Profil in der eUICC 1 empfangen. Dieses Profil wird im Schritt 102 abgespeichert. Danach wird das Teilnehmeridentitätsmodul 1 beispielsweise ausgeliefert und/oder mit einem anderen Profil betrieben.

In einem beliebigen Zeitpunkt X wird im Schritt 103 ein Schlüssel in der eUICC 1 empfangen. Alternativ - durch die Schritte 103a und 103b dargestellt - empfängt die eUICC 1 zwei Schlüsselteile (bzw. zwei verschiedene Schlüssel). Im Schritt 104 wird das Profil mit dem in Schritt 103 empfangenen Schlüssel entschlüsselt. Der Schritt 104 kann auch das Bilden eines Schlüssels aus den im Schritt 103a und 103b empfangenen Schlüsselteile umfassen. Anschließend wird das entschlüsselte Profil 11 im Schritt 105 installiert. Schließlich wird das erfolgreiche entschlüsseln - optional - im Schritt 106 bestätigt.

In Fig. 3 ist nicht dargestellt, dass zusätzlich zum erfindungsgemäßen Entschlüsseln auch der Aufbau eines sicheren Kanals, beispielsweise über die Schnittstellen ES5, ES8 vorgesehen ist. Zudem ist auch ein Profile package bounding, also das eindeutige Zuordnen eines Profils zu einer spezifischen eUICC 1 mittels Sitzungsschlüsseln unter Verwendung von Signaturen und Zertifikaten des Servers 2 und der eUICC 1 vorgesehen. Diese zusätzlichen Verschlüsselungen sind von der erfindungsgemäßen Verschlüsselung/Entschlüsselung zu trennen, da diese einer strengen zeitlichen Abfolge entsprechen müssen, um ein erfolgreiches Einbringen eines Profils gemäß der technischen Spezifikationen [1] bis [3] zu ermöglichen.

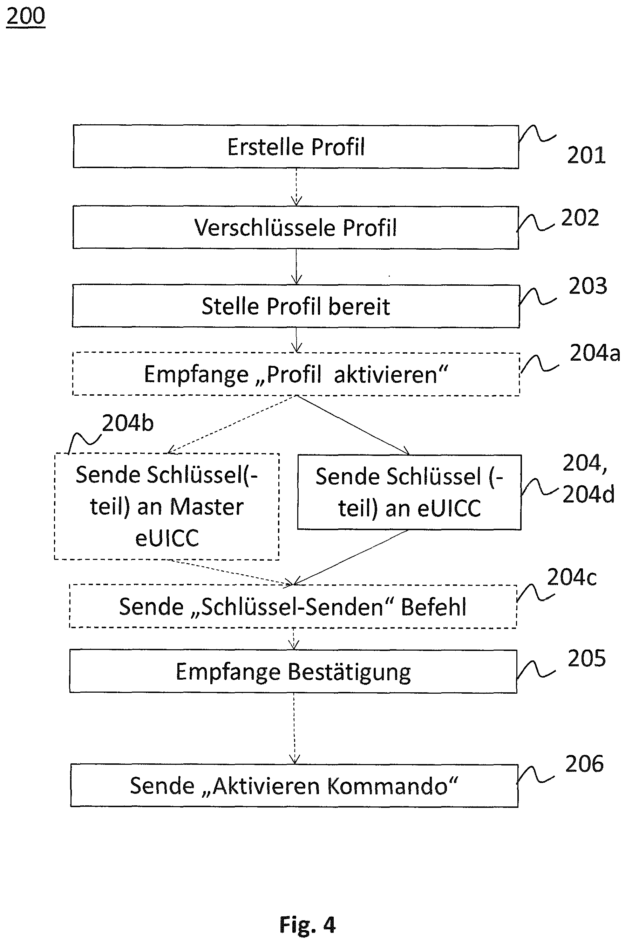

Fig. 4 zeigt ein Ausführungsbeispiel eines Ablaufdiagrams eines erfindungsgemäßen Verfahrens 200 in einem Subskriptions-Server 2. Der Server 2 erstellt im Schritt 201 ein Profil. Im Schritt 201 wird das erstellte Profil verschlüsselt. Im Schritt 203 wird das verschlüsselte Profil bereitgestellt. Dies erfolgt beispielsweise direkt vom Server 2 an die eUICC 1 oder indirekt über einen Herausgeber EUM 5 der eUICC 1.

Optional empfängt der Server 2 einen Profil-Aktivieren Schritt, beispielsweise im Rahmen eines Vertragsabschlusses. Im Schritt 204 wird der zum Entschlüsseln des Profils 11 benötigte Schlüssel an die eUICC 1 gesendet. Dies ist beispielsweise eine als Datensatz übermittelter Software-Token. Alternativ wird im Schritt 204b ein Schlüssel an eine Master-eUICC 7 gesendet. Im Schritt 204b kann auch nur ein Schlüsselteil an die Master-eUICC 7 gesendet werden, wobei dazu auch im Schritt 204d ein vom Schlüsselteil an die Master-eUICC 7 verschiedener Schlüsselteil an die eUICC 1 gesendet wird.

Im optionalen Schritt 204c wird ein Befehl zum Schlüssel-Senden vom Server 2 an die Master-eUICC 7 gesendet.

Daraufhin wird das Profil im eUICC 1 entschlüsselt und installiert, wodurch es eingerichtet ist. Im Schritt 205 empfängt der Server 2 eine Bestätigung von der eUICC 1, dass das Profil eingerichtet ist. Im Schritt 206 sendet der Server 2 ein Aktivieren Kommando an die eUICC 1, um das Profil zu aktivieren.

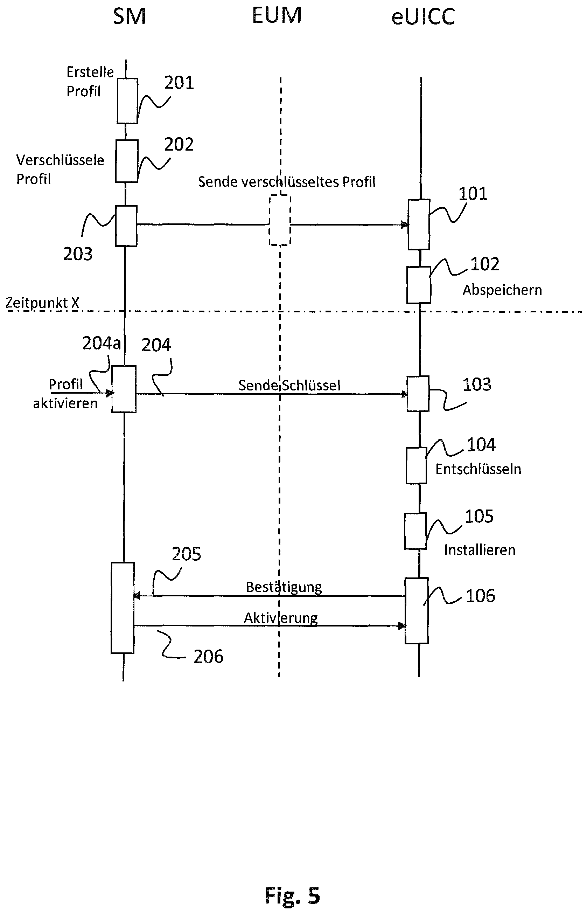

In Fig. 5 ist ein Ausführungsbeispiel eines Ablaufdiagrams eines erfindungsgemäßen Verfahrens zwischen einem Teilnehmeridentitätsmodul 1 und einem Subskriptions-Server 2 gezeigt. Fig. 5 vereint die beiden Verfahren 100 und 200 aus den vorhergehend beschriebenen Figuren 3 und 4. Auf eine Wiederholung des vorher dargestellten kann damit verzichtet werden.

Ausgangspunkt der Erfindung ist das Erstellen eines Profils 11 im Server 2, bevorzugt in dem SM-DP 2b. Im Schritt 202 wird das Profil verschlüsselt. Im Schritt 203 wird das verschlüsselte Profil über eine Schnittstelle ES5 an die eUICC gesendet. Alternativ wird im Schritt 203 das verschlüsselte Profil vom Server 2 (SM-DP 2b) über die Schnittstellen ES3 und ES1 an den Herausgeber 5 gesendet. Im Ergebnis erhält die eUICC 1 das verschlüsselte Profil über die Schnittstelle ES5 oder ES8 im Schritt 101. Im Schritt 102 wird das verschlüsselte Profil abgespeichert. Zu einem Zeitpunkt X, der Monate oder Jahre später sein kann, erhält der Server 2 ggf. einen Profil-Aktiveren Befehl im optionalen Schritt 204a. Im Schritt 204 wird ein kryptografischer Schlüssel vom Server 2 and die eUICC 1 gesendet und dort im Schritt 103 empfangen. Im Schritt 104 entschlüsselt die eUICC 1 das abgespeicherte verschlüsselte Profil und installiert es im Schritt 105. Das Profil gilt nach dem Schritt 105 als vollständig eingerichtet. Im Schritt 106 sendet die eUICC 1 eine entsprechende Bestätigung an den Server 205, der wiederum daraufhin im Schritt 206 das eingerichtete Profil aktiviert.

Das Aktivieren des Profils kann einem MNO-Server 3 durch den Server 2 angezeigt werden. Während des Aktivierens des Profils wird ggf. ein REFRESH proaktives Kommando an ein Endgerät 6 gesendet, um die eUICC 1 neu zu starten.

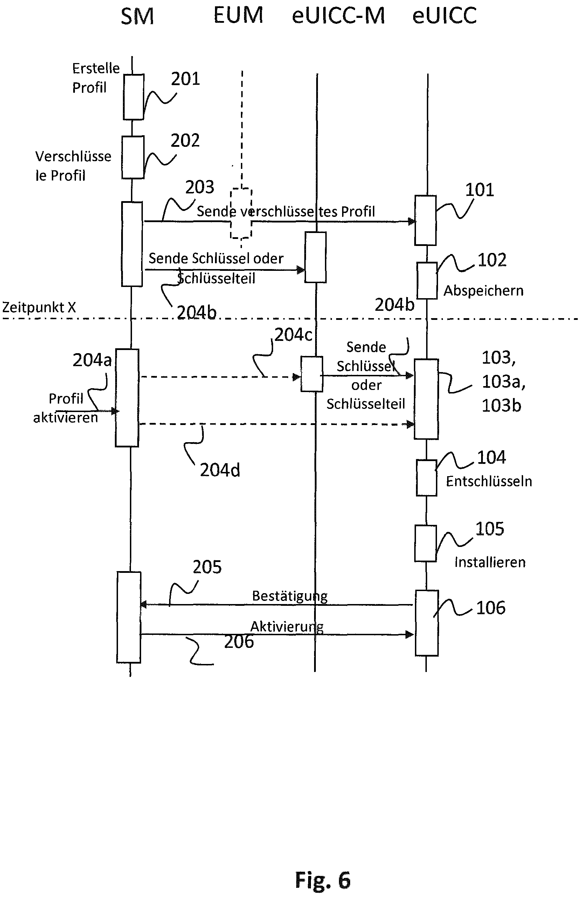

In Fig. 6 ist ein zur Fig. 5 erweitertes Ausführungsbeispiel eines Ablaufdiagrams eines erfindungsgemäßen Verfahrens zwischen einem Teilnehmeridentitätsmodul 1 und einem Subskriptions-Server 2 gezeigt. Fig. 6 vereint ebenfalls die beiden Verfahren 100 und 200 aus den vorhergehend beschriebenen Figuren 3 und 4. Auf eine Wiederholung des vorher dargestellten kann damit verzichtet werden, es werden nur die Unterschiede zu Fig. 5 beschrieben.

Im Schritt 204b wird der kryptografische Schlüssel vom Server 2 an eine Master-eUICC 7 übertragen. Diese Master-eUICC 7 ist eine vertrauenswürdige Instanz. Beispielsweise ist die Master-eUICC 7 eine zweite eUICC 7 im Verfahren. Zwischen der eUICC 1 und der Master-eUICC 1 kann beispielsweise eine Zugehörigkeit definiert sein, beispielsweise eine Familien- oder Firmenzugehörigkeit, mit der das verschlüsselte Profil der eUICC 1 durch den Schlüssel der eUICC 7 entschlüsselt wird. Damit kann das Entschlüsseln des Profils der eUICC 1 auf eine andere vertrauenswürdige Instanz delegiert werden. Im Schritt 204b kann auch nur ein Schlüsselteil übertragen werden. Ein zweiter Schlüsselteil verbleibt dann in dem Server 2 und wird erst bei Profil-Aktivieren 204a, also nach dem Zeitpunkt x an die eUICC 1 im Schritt 204d übertragen. Das Übertragen des Schlüsselteils der Master-eUICC 7 kann durch einen Schritt 204c initialisiert werden, sodass die Master-eUICC 7 nach dem Schritt 203c den zweiten Schlüsselteil an die eUICC 1 sendet. Mittels beider Schlüsselteile, die gemäß Schritt 204b und 204d übertragen wurden, kann ein kryptografischer Schlüssel gebildet werden in der eUICC 1, mit dem das Profil entschlüsselt werden kann. Anstelle verschiedener Schlüsselteile können auch zwei verschiedene Schlüssel verwendet werden, um das Profil zu entschlüsseln. Der kryptografische Schlüssel kann ein privater Schlüssel einer PKI Infrastruktur sein. Der kryptografische Schlüssel kann ein symmetrischer Schlüssel sein. Der kryptografische Schlüssel ist insbesondere ein Geheimnis ohne dass das Profil nicht entschlüsselt werden kann.

Die Folgeschritte 104 bis 106 und 205 entsprechen den Schritten der Fig. 5.

Der Zeitpunkt X kann Monate oder Jahre nach dem Abspeichern-Schritt 102 liegen, wodurch das Einbringen eines Profils zeitlich vom Einrichten des Profils entkoppelt werden kann. Auslieferung der eUICC 1 ist somit nicht mehr an das Einrichten des Profils geknüpft, Auslieferungsinfrastruktur lässt sich damit stark vereinfachen.

Im Rahmen der Erfindung können alle beschriebenen und/oder gezeichneten und/oder beanspruchten Elemente beliebig miteinander kombiniert werden.

### BEZUGSZEICHENLISTE

- 1: Teilnehmeridentitätsmodul, eUICC
10 Profil-Dateistruktur, Issuer Security Domain, ISD-P
11 Subskriptions-Profile entschlüsselt
111 Profil-Daten
12 Herausgeber-Sicherheitsbereich, UICC-basiert, Issuer Security Domain, ISD-R
- 2: Subskriptions-Server
2a Serverkomponente, Subscription Manager Secure Routing, SM-SR
2b Serverkomponente, Subscription Manager Data Preparation, SM-DP
- 3: Mobilfunknetzbetreiber, Mobile Network Operator, MNO
- 4: Zertifikatsherausgeber, CI
- 5: eUICC Hersteller, EUM
- 6: Endgerät
- 7: Master-eUICC
- 101-106: Verfahrensschritte im Teilnehmeridentitätsmodul, eUICC
- 201-206: Verfahrensschritte im Subskriptions-Server
- ES1-ES10: Schnittstellen

## Patentansprüche

1. Ein Verfahren (100) zum Einrichten eines Subskriptions-Profils (11) in einem Teilnehmeridentitätsmodul (1), wobei im Teilnehmeridentitätsmodul (1) die folgenden Verfahrensschritte ablaufen:
- Empfangen (101) eines mit einem kryptografischen Schlüssel eines Subskriptions-Servers (2) verschlüsselten Subskriptions-Profils (11), wobei dem Teilnehmeridentitätsmodul (1) der kryptografische Schlüssel zum Entschlüsseln des Subskriptions-Profils (11) zum Zeitpunkt des Empfangens (101) unbekannt ist, und wobei das Teilnehmeridentitätsmodul (1) den kryptografischen Schlüssel zum Entschlüsseln des Subskriptions-Profils (11) zum Zeitpunkt des Empfangens (101) nicht aufweist;
- Speichern (102) des verschlüsselten Subskriptions-Profils (11) ohne das Subskriptions-Profil (11) zu entschlüsseln;
- Empfangen (103, 103a, 103b) des kryptografischen Schlüssels zu einem Zeitpunkt (X) nach dem Speichern-Schritt (102);
- Entschlüsseln (104) des verschlüsselten Subskriptions-Profils (11) mit dem kryptografischen Schlüssel; und
- Installieren (105) des entschlüsselten Subskriptions-Profil (11) zum Einrichten des Subskriptions-Profil (11) in dem Teilnehmeridentitätsmodul (1).

2. Das Verfahren (100) nach Anspruch 1, wobei das verschlüsselte Subskriptions-Profil (11) von einem Subskriptions-Server (2) empfangen (101) wird.

3. Das Verfahren (100) nach Anspruch 1, wobei das verschlüsselte Subskriptions-Profil (11) von einem Herausgeber (5) des Teilnehmeridentitätsmoduls (1) empfangen (101) wird.

4. Das Verfahren (100) nach einem der vorhergehenden Ansprüche, wobei der kryptografische Schlüssel zum Entschlüsseln (104) des verschlüsselten Subskriptions-Profils (11) von einem Subskriptions-Server (2) zu einem Zeitpunkt (X) nach dem Speichern-Schritt (102) empfangen (103) wird.

5. Das Verfahren (100) nach einem der vorhergehenden Ansprüche 1 bis 3, wobei der kryptografische Schlüssel zum Entschlüsseln (104) des verschlüsselten Subskriptions-Profils (11) von einem zweiten Teilnehmeridentitätsmodul (7) zu einem Zeitpunkt (X) nach dem Speichern-Schritt (102) empfangen (103) wird.

6. Das Verfahren (100) nach einem der vorhergehenden Ansprüche 1 bis 3, wobei der kryptografische Schlüssel zum Entschlüsseln (104) des verschlüsselten Subskriptions-Profils (11) im Teilnehmeridentitätsmodul (1) aus einem, von einem zweiten Teilnehmeridentitätsmodul (7) zu einem Zeitpunkt (X) nach dem Speichern-Schritt (102) empfangenen (103a) ersten Teil und einem von einem Subskriptions-Server (2) zu einem Zeitpunkt (X) nach dem Speichern-Schritt (102) empfangenen (103b) zweiten Teil in dem Teilnehmeridentitätsmodul (1) gebildet wird.

7. Ein Verfahren (200) zum Bereitstellen von Subskriptions-Profilen (11) für ein Teilnehmeridentitätsmodul (1), mittels eines Subskriptions-Servers (2), bevorzugt eines SM-DP (2b), wobei im Subskriptions-Server (2) die folgenden Verfahrensschritte ablaufen:
- Erstellen (201) eines Subskriptions-Profils (11) für ein Teilnehmeridentitätsmodul (1);
- Verschlüsseln (202) des erstellten Subskriptions-Profils (11) mit einem kryptografischen Schlüssel, der dem Teilnehmeridentitätsmodul (1) unbekannt ist, und wobei das Teilnehmeridentitätsmodul (1) den kryptografischen Schlüssel zum Entschlüsseln des Subskriptions-Profils (11) zum Zeitpunkt des Empfangens (101) nicht aufweist;
- Bereitstellen (203) des verschlüsselten Subskriptions-Profils (11b) zum Einbringen (102) des verschlüsselten Subskriptions-Profils in das Teilnehmeridentitätsmodul (1);
- Senden (204, 204b, 204c, 204d) eines zum Entschlüsseln (104) des Subskriptions-Profils (11) geeigneten kryptografischen Schlüssels oder eines ersten Schlüsselteils zu einem Zeitpunkt (X) nach dem Bereitstellen (203) des verschlüsselten Subskriptions-Profils (11); und
- Empfangen (205) einer Bestätigung vom Teilnehmeridentitätsmodul (1), dass das Subskriptions-Profil (11) entschlüsselt und installiert wurde.

8. Das Verfahren (200) nach Anspruch 7, wobei das Einbringen (203) von dem Subskriptions-Server (2) oder einem Herausgeber (5) des Teilnehmeridentitätsmoduls (1) erfolgt.

9. Das Verfahren (200) nach Anspruch 7 oder 8,
- wobei das Senden (204, 204d) des kryptografischen Schlüssels oder des ersten Schlüsselteils vom Subskriptions-Server (2) direkt zum Teilnehmeridentitätsmodul (1) erfolgt oder,
- wobei das Senden (204b) des kryptografischen Schlüssels vom Subskriptions-Server (2) direkt zu einem zweiten Teilnehmeridentitätsmodul (7) erfolgt, wobei das zweite Teilnehmeridentitätsmodul (7) den kryptografischen Schlüssel zum Entschlüsseln (104) des Subskriptions-Profils zum Teilnehmeridentitätsmodul (1) sendet.

10. Das Verfahren (200) nach einem der Ansprüche 7 bis 8, wobei das Senden (204b, 204d) des ersten Schlüsselteils vom Subskriptions-Server (2) zudem umfasst:
- Senden (204d) des ersten Schlüsselteils vom Subskriptions-Server (2) direkt zum Teilnehmeridentitätsmodul (1);
- Senden (204b) eines zweiten Schlüsselteils vom Subskriptions-Server (2) direkt zu einem zweiten Teilnehmeridentitätsmodul (1), wobei der kryptografische Schlüssel zum Entschlüsseln (104) des verschlüsselten Profils (11) aus dem ersten Schlüsselteil und dem zweiten Schlüsselteil gebildet wird.

11. Das Verfahren (100) nach einem der vorhergehenden Ansprüche, wobei die Verfahrensschritte eine Erstellen-Funktion und/oder eine Aktivieren-Funktion und/oder eine Deaktivieren-Funktion gemäß der technischen Spezifikation SGP02-Remote-Provisioning-Architecture-for-Embedded-UICC, Version 2.0 umfassen.

12. Ein Teilnehmeridentitätsmodul (1), umfassend ein im Teilnehmeridentitätsmodul (1) abgespeichertes verschlüsseltes Subskriptions-Profil (11) mit:
- einer Entschlüsselungs-Funktion, die dazu eingerichtet ist, nach einem Empfangen (103, 103a, 103b) eines kryptografischen Schlüssels zu einem Zeitpunkt (X) nach einem Speichern Schritt des verschlüsselten Subskriptions-Profils, das verschlüsselte Subskriptions-Profil (11) zu entschlüsseln (104) , wobei dem Teilnehmeridentitätsmodul (1) der kryptografische Schlüssel zum Entschlüsseln des Subskriptions-Profils (11) zum Zeitpunkt eines Empfangens (101) des verschlüsselten Subskriptions-Profils (11) unbekannt ist, und wobei das Teilnehmeridentitätsmodul (1) den kryptografischen Schlüssel zum Entschlüsseln des Subskriptions-Profils (11) zum Zeitpunkt des Empfangens (101) nicht aufweist; und
- einer Installations-Funktion eingerichtet zum Installieren (105) des entschlüsselten Subskriptions-Profils (11) im Teilnehmeridentitätsmodul (1), wodurch das Subskriptions-Profil (11) im Teilnehmeridentitätsmodul (1) eingerichtet ist.

13. Das Teilnehmeridentitätsmodul (1) gemäß Anspruch 12, wobei die Entschlüsselungs-Funktion und die Installations-Funktion durch eine Funktionalität eines Betriebssystems des Teilnehmeridentitätsmoduls oder durch ein Applet realisiert sind, wobei die Funktionalität des Betriebssystems oder das Applet eingerichtet ist, nach dem Empfangen (103, 103a, 103b) des kryptografischen Schlüssels oder Schlüsselteils zu starten.

14. Das Teilnehmeridentitätsmodul (1) gemäß Anspruch 12 oder 13, weiter umfassend:
- einen Datenspeicher zum Abspeichern der Subskriptions-Profile (11),
- eine Schnittstelle (ES5, ES8), eingerichtet zur Kommunikation mit dem Subskriptions-Server (2), bevorzugt über ein Endgerät (6), welches das Teilnehmeridentitätsmodul (1) aufweist;
- eine Schnittstelle (ES6), eingerichtet zur Kommunikation mit einem Netzwerk-Server (3); und
- Mittel, die eingerichtet sind, das Verfahren (100) gemäß einer der Ansprüche 1 bis 6 durchzuführen.

15. Ein Computerprogramprodukt ausführbar installiert in einem Teilnehmeridentitätsmodul (1) und aufweisend Mittel zum Ausführen der Verfahrensschritte einer der Ansprüche 1 bis 6.

## Claims

1. A method (100) for setting up a subscription profile (11) in a subscriber identity module (1), wherein the following method steps are carried out in the subscriber identity module (1):
- receiving (101) a subscription profile (11), encrypted with a cryptographic key of a subscription server (2), wherein the cryptographic key for decrypting the subscription profile (11) is unknown to the subscriber identity module (1) at the time of receiving (101), and wherein the subscriber identity module (1) does not have the cryptographic key for decrypting the subscription profile (11) at the time of receiving (101) ;
- storing (102) the encrypted subscription profile (11) without decrypting the subscription profile (11);
- receiving (103, 103a, 103b) the cryptographic key at a time (X) after the storing step (102) ;
- decrypting (104) the encrypted subscription profile (11) with the cryptographic key; and
- installing (105) the decrypted subscription profile (11) for setting up the subscription profile (11) in the subscriber identity module (1).

2. The method (100) according to claim 1, wherein the encrypted subscription profile (11) is received (101) from a subscription server (2).

3. The method (100) of claim 1, wherein the encrypted subscription profile (11) is received (101) by an issuer (5) of the subscriber identity module (1).

4. The method (100) according to any one of the preceding claims, wherein the cryptographic key for decrypting (104) the encrypted subscription profile (11) is received (103) from a subscription server (2) at a time (X) after the storing step (102).

5. The method (100) according to any one of the preceding claims 1 to 3, wherein the cryptographic key for decrypting (104) the encrypted subscription profile (11) is received (103) by a second subscriber identity module (7) at a time (X) after the storing step (102).

6. The method (100) according to any one of the preceding claims 1 to 3, wherein the cryptographic key for decrypting (104) the encrypted subscription profile (11) in the subscriber identity module (1) is formed from a first part (103a), received from a second subscriber identity module (7) at a time (X) after the storing step (102), and a second part (103b), received from a subscription server (2) at a time (X) after the storing step (102) in the subscriber identity module (1).

7. A method (200) for providing subscription profiles (11) for a subscriber identity module (1) by means of a subscription server (2), preferably an SM-DP (2b), wherein the following method steps take place in the subscription server (2):
- creating (201) a subscription profile (11) for a subscriber identity module (1);
- encrypting (202) the created subscription profile (11) with a cryptographic key, unknown to the subscriber identity module (1), and wherein the subscriber identity module (1) does not have the cryptographic key for decrypting the subscription profile (11) at the time of receiving (101);
- providing (203) the encrypted subscription profile (11b) for incorporating (102) the encrypted subscription profile into the subscriber identity module (1);
- sending (204, 204b, 204c, 204d) a cryptographic key or a first key part, suitable for decrypting (104) the subscription profile (11) at a time (X) after providing (203) the encrypted subscription profile (11); and
- receiving (205) a confirmation from the subscriber identity module (1) that the subscription profile (11) has been decrypted and installed.

8. The method (200) according to claim 7, wherein the insertion (203) is performed by the subscription server (2) or a publisher (5) of the subscriber identity module (1).

9. The method (200) according to claim 7 or 8,
- wherein the sending (204, 204d) of the cryptographic key or the first key part is carried out from the subscription server (2) directly to the subscriber identity module (1) or,
- wherein the sending (204b) of the cryptographic key from the subscription server (2) takes place directly to a second subscriber identity module (7), wherein the second subscriber identity module (7) sends the cryptographic key for decrypting (104) the subscription profile to the subscriber identity module (1).

10. The method (200) according to any one of claims 7 to 8, wherein sending (204b, 204d) the first key part from the subscription server (2) further comprises:
- sending (204d) the first key part from the subscription server (2) directly to the subscriber identity module (1);
- sending (204b) a second key part from the subscription server (2) directly to a second subscriber identity module (1), wherein the cryptographic key for decrypting (104) the encrypted profile (11) is formed from the first key part and the second key part.

11. The method (100) according to any one of the preceding claims, wherein the method steps comprise a create-function and/or an activate-function and/or a deactivate-function according to the technical specification SGP02-Remote-Provisioning-Architecture-for-Embedded-UICC, Version 2.0.

12. A subscriber identity module (1), comprising an encrypted subscription profile (11) stored in the subscriber identity module (1) with:
- a decryption function, configured to decrypt (104) the encrypted subscription profile (11) after receiving (103, 103a, 103b) a cryptographic key at a time (X) after a step of storing the encrypted subscription profile (11), wherein the cryptographic key for decrypting the subscription profile (11) is unknown to the subscriber identity module (1) at the time of receiving (101) the encrypted subscription profile (11), and wherein the subscriber identity module (1) does not have the cryptographic key for decrypting the subscription profile (11) at the time of receiving (101); and
- an installation function, configured to install (105) the decrypted subscription profile (11) in the subscriber identity module (1), whereby the subscription profile (11) is configured in the subscriber identity module (1).

13. The subscriber identity module (1) according to claim 12, wherein the decryption function and the installation function are implemented by a functionality of an operating system of the subscriber identity module or by an applet, wherein the functionality of the operating system or the applet is configured to start after receiving (103, 103a, 103b) the cryptographic key or key part.

14. The subscriber identity module (1) according to claim 12 or 13, further comprising:
- a data memory for storing the subscription profiles (11),
- an interface (ES5, ES8), configured to communicate with the subscription server (2), preferably via a terminal (6) having the subscriber identity module (1);
- an interface (ES6), configured to communicate with a network server (3); and
- means, configured to carry out the method (100) according to any one of claims 1 to 6.

15. A computer program product, executable installed in a subscriber identity module (1) and comprising means for carrying out the method steps of any one of claims 1 to 6.

## Revendications

1. Procédé (100) pour configurer un profil d'abonnement (11) dans un module d'identité de l'abonné (1), dans lequel les étapes de procédé suivantes ont lieu dans le module d'identité de l'abonné (1) :
- recevoir (101) un profil d'abonnement (11) chiffré avec une clé cryptographique d'un serveur d'abonnements (2), dans lequel la clé cryptographique destinée à déchiffrer le profil d'abonnement (11) est inconnue du module d'identité de l'abonné (1) au moment de la réception (101), et dans lequel le module d'identité de l'abonné (1) ne comporte pas la clé cryptographique (11) destinée à déchiffrer le profil d'abonnement (11) au moment de la réception ;
- stocker (102) le profil d'abonnement (11) chiffré sans déchiffrer le profil d'abonnement (11) ;
- recevoir (103, 103a, 103b) la clé cryptographique à un instant (X) après l'étape de stockage (102) ;
- déchiffrer (104) le profil d'abonnement (11) chiffré avec la clé cryptographique; et
- installer (105) le profil d'abonnement (11) déchiffré pour configurer le profil d'abonnement (11) dans le module d'identité de l'abonné (1).

2. Procédé (100) selon la revendication 1, dans lequel le profil d'abonnement (11) chiffré est reçu (101) d'un serveur d'abonnements (2).

3. Procédé (100) selon la revendication 1, dans lequel le profil d'abonnement (11) chiffré est reçu (101) d'un émetteur (5) du module d'identité de l'abonné (1).

4. Procédé (100) selon l'une des revendications précédentes, dans lequel la clé cryptographique (104) destinée à déchiffrer le profil d'abonnement (11) chiffré est reçue (103) d'un serveur d'abonnements (2) à un instant (X) après l'étape d'enregistrement (102).

5. Procédé (100) selon l'une des revendications 1 à 3 précédentes, dans lequel la clé cryptographique destinée à déchiffrer (104) le profil d'abonnement (11) chiffré est reçue (103) d'un second module d'identité de l'abonné (7) à un instant (X) après l'étape de stockage (102).

6. Procédé (100) selon l'une des revendications 1 à 3 précédentes, dans lequel la clé cryptographique destinée à déchiffrer (104) le profil d'abonnement (11) chiffré dans le module d'identité de l'abonné (1) est formée dans le module d'identité de l'abonné (1) à partir d'une première partie reçue (103a) par un second module d'identité de l'abonné (7) à un instant (X) après l'étape de stockage (102), et d'une seconde partie reçue (103b) par un serveur d'abonnement (2) à un instant (X) après l'étape de stockage (102).

7. Procédé (200) pour fournir des profils d'abonnement (11) pour un module d'identité de l'abonné (1) au moyen d'un serveur d'abonnements (2), de préférence d'un SM-DP (2b), dans lequel les étapes de procédé suivantes ont lieu dans le serveur d'abonnements (2) :
- créer (201) un profil d'abonnement (11) pour un module d'identité de l'abonné (1) ;
- chiffrer (202) le profil d'abonnement (11) créé avec une clé cryptographique qui est inconnue du module d'identité de l'abonné (1), et dans lequel le module d'identité de l'abonné (1) ne comporte pas la clé cryptographique destinée à déchiffrer le profil d'abonnement (11) au moment de la réception (101) ;
- fournir (203) le profil d'abonnement (11b) chiffré pour insérer (102) le profil d'abonnement chiffré dans le module d'identité de l'abonné (1) ;
- envoyer (204, 204b, 204c, 204d) une clé cryptographique appropriée pour déchiffrer (104) le profil d'abonnement (11) ou une première partie de clé à un instant (X) après la fourniture (203) du profil d'abonnement (11) chiffré ; et
- recevoir (205) une confirmation du module d'identité de l'abonné (1) que le profil d'abonnement (11) a été déchiffré et installé.

8. Procédé (200) selon la revendication 7, dans lequel l'insertion (203) est effectuée par le serveur d'abonnements (2) ou un émetteur (5) du module d'identité de l'abonné (1).

9. Procédé (200) selon la revendication 7 ou 8,
- dans lequel l'envoi (204, 204d) de la clé cryptographique ou de la première partie de la clé s'effectue à partir du serveur d'abonnements (2) directement au module d'identité de l'abonné (1), ou
- dans lequel l'envoi (204b) de la clé cryptographique s'effectue à partir du serveur d'abonnements (2) directement à un second module d'identité de l'abonné (7), dans lequel le second module d'identité de l'abonné (7) envoie au module d'identité de l'abonné (1) la clé cryptographique destinée à déchiffrer (104) le profil d'abonnement.

10. Procédé (200) selon l'une des revendications 7 à 8, dans lequel l'envoi (204b, 204d) de la première partie clé à partir du serveur d'abonnements (2) comprend en outre de :
- envoyer (204d) la première partie de la clé du serveur d'abonnements (2) directement au module d'identité de l'abonné (1) ;
- envoyer (204b) une seconde partie de clé à partir du serveur d'abonnements (2) directement à un second module d'identité de l'abonné (1), dans lequel la clé cryptographique pour déchiffrer (104) le profil (11) chiffré est formée à partir de la première partie de la clé et de la seconde partie de la clé.

11. Procédé (100) selon l'une des revendications précédentes, dans lequel les étapes de procédé comprennent une fonction de création et/ou une fonction d'activation et/ou une fonction de désactivation conformément à la spécification technique SGP02 - Remote Provisioning Architecture for Embedded UICC, version 2.0.

12. Module d'identité de l'abonné (1) comprenant un profil d'abonnement (11) chiffré stocké dans le module d'identité de l'abonné (1) avec :
- une fonction de décryptage qui est configurée pour déchiffrer le profil d'abonnement (11) chiffré après une réception (103, 103a, 103b) d'une clé cryptographique à un instant (X) après une étape de stockage du profil d'abonnement chiffré, dans lequel la clé cryptographique destinée à déchiffrer le module d'identité de l'abonné (1) est inconnue du module d'identité de l'abonné (1) au moment d'une réception (101) du profil d'abonnement (11) chiffré, et dans lequel le module d'identité de l'abonné (1) ne comporte pas la clé cryptographique destinée à déchiffrer le profil d'abonnement (11) au moment de la réception (101) ; et
- une fonction d'installation est configurée pour installer (105) le profil d'abonnement (11) déchiffré dans le module d'identité de l'abonné (1), en sorte que le profil d'abonnement (11) est configuré dans le module d'identité de l'abonné (1).

13. Module d'identité de l'abonné (1) selon la revendication 12, dans lequel la fonction de déchiffrement et la fonction d'installation sont réalisées par une fonctionnalité d'un système d'exploitation du module d'identité de l'abonné ou par une appliquette, dans lequel la fonctionnalité du système d'exploitation ou de l'appliquette est configurée pour démarrer après la réception (103, 103a, 103b) de la clé ou de la partie de clé.

14. Module d'identité de l'abonné (1) selon la revendication 12 ou 13, comprenant en outre :
- une mémoire de données pour stocker les profils d'abonnement (11),
- une interface (ES5, ES8) configurée pour communiquer avec le serveur d'abonnements (2), de préférence via un terminal (6) qui comporte le module d'identité de l'abonné (1) ;
- une interface (ES6), configurée pour communiquer avec un serveur de réseau (3) ; et
- des moyens qui sont configurés pour mettre en œuvre le procédé (100) selon l'une des revendications 1 à 6.

15. Produit de programme informatique installé de façon à pouvoir être exécuté dans un module d'identité de l'abonné (1) et comportant des moyens pour mettre en œuvre les étapes de procédé de l'une des revendications 1 à 6.
